# EUROPÄISCHE PATENTSCHRIFT

(11) **EP 2 260 619 B1**
(45) Veröffentlichungstag und Bekanntmachung des Hinweises auf die Patenterteilung: **09.07.2014**
(21) Anmeldenummer: 08735634.1
(22) Anmeldetag: 01.04.2008
(51) Int. Cl.: H04L 12/721, H04L 29/06, H04L 29/08

(54) **VERFAHREN UND VORRICHTUNG ZUR ÜBERTRAGUNG EINER DATENEINHEIT UND SYSTEM UMFASSEND EINE DERARTIGE VORRICHTUNG**
METHOD AND DEVICE FOR TRANSFERRING A DATA UNIT AND SYSTEM COMPRISING SUCH A DEVICE
PROCÉDÉ ET DISPOSITIF DE TRANSMISSION D'UNE UNITÉ DE DONNÉES ET SYSTÈME COMPORTANT UN TEL DISPOSITIF

(43) Veröffentlichungstag der Anmeldung: 15.12.2010
(73) Patentinhaber: Siemens Aktiengesellschaft, 80333 München (DE)
(72) Erfinder: KUSSYK, Jaroslaw, A-1170 Wien (AT)
(74) Vertreter: Maier, Daniel Oliver
(86) Internationale Anmeldenummer: PCT/EP2008/053858
(87) Internationale Veröffentlichungsnummer: WO 2009/121398

(56) Entgegenhaltungen:
- US-A1- 2007 053 352
- DEERING CISCO R HINDEN NOKIA S: "Internet Protocol, Version 6 (IPv6) Specification; rfc2460.txt" IETF STANDARD, INTERNET ENGINEERING TASK FORCE, IETF, CH, 1. Dezember 1998 (1998-12-01), XP015008244 ISSN: 0000-0003
- SIMPSON DAYDREAMER W: "IP in IP Tunneling; rfc1853.txt" IETF STANDARD, INTERNET ENGINEERING TASK FORCE, IETF, CH, 1. Oktober 1995 (1995-10-01), XP015007637 ISSN: 0000-0003

## Beschreibung

Die Erfindung betrifft ein Verfahren und eine Vorrichtung zur Übertragung einer Dateneinheit sowie ein System umfassend eine derartige Vorrichtung.

Es sind Kommunikationssysteme bekannt (siehe [1]), bei denen eine Adaption von Übertragungsparametern zwischen Kommunikationsgeräten einzelner Punkt-zu-Punkt-Verbindungen erfolgt. Diesbezüglich werden vor einer Initialisierung einer Gegenstelle Übertragungskanaleigenschaften einer Teilstrecke (Signaldämpfung und Störungspegel) ermittelt. Anhand dieser Daten werden entsprechende Parameter für die anschließende Initialisierung gewählt. Ändern sich die Kanaleigenschaften, kann eine erneute Initialisierung durchgeführt werden.

Bei Kommunikationsnetzwerken zur Verarbeitung von Datenpaketen wird im Falle einer Störung auf einer Teilstrecke zwischen zwei Kommunikationsgeräten nach einer alternativen Route gesucht.

Hierbei ist es von Nachteil, dass eine Adaption der Kommunikationsparameter in einem Netzwerk (z.B. in einem Gleichwellennetz) mit einer Vielzahl von Teilnehmern, die ein einzelnes Medium zur Informationsübertragung nutzen und nicht immer direkt sondern über andere Teilnehmer (als Relay-Stationen) miteinander kommunizieren, mit derartigen Ansätzen nicht effektiv möglich ist. Zusätzlich erschwert bis unmöglich wird eine Adaptation dann, wenn sich die Übertragungsbedingungen häufig ändern.

Gemäß dem im RFC1853, Network Working Group 10/95, Simpson, Daydreamer vorgestellten Verfahren können über einen IP Kanal weitere IP Pakete getunnelt werden, welche gemäß eines anderen Verfahrens codiert sind.

Die Aufgabe der Erfindung besteht darin, die vorstehend genannten Nachteile zu vermeiden und insbesondere einen Ansatz zu schaffen, anhand dessen eine effektive Adaption von Kommunikationsparametern in einem Gleichwellennetz ermöglicht wird.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren angegeben zur Übertragung einer Dateneinheit in einem Netzwerk,
- bei dem die Dateneinheit einen ersten Übertragungsparameter für einen ersten Übertragungsabschnitt umfasst;
- bei dem die Dateneinheit einen zweiten Übertragungsparameter für einen zweiten Übertragungsabschnitt umfasst;
- bei dem die Dateneinheit oder ein Teil der Dateneinheit über den ersten Übertragungsabschnitt unter Berücksichtigung der ersten Übertragungsparameters übertragen wird und bei dem die Dateneinheit oder ein Teil der Dateneinheit über den zweiten Übertragungsabschnitt unter Berücksichtigung des zweiten Übertragungsparameters übertragen wird.

Hierdurch kann vorteilhaft die Datenübertragung je nach Übertragungsabschnitt angepasst werden. Beispielsweise kann gezielt für einen Übertragungsabschnitt mit einem hohem Signalstörabstand eine hohe Bitrate verwendet werden.

Hierbei kann es sich bei dem ersten, zweiten oder jedem weiteren Übertragungsabschnitt um einen Streckenabschnitt, eine Teilstrecke oder einen sog. Hop in dem Netzwerk, insbesondere in einem (Daten-)Kommunikationsnetzwerk handeln. Insbesondere kann jeder Übertragungsabschnitt zwischen zwei Netzelementen, Netzknoten oder Teilnehmern vorgesehen sein.

In adaptiven Informationsübertragungssystemen ist es von Vorteil, eine Datenübertragungsrate, einen Übertragungsmodus und/oder andere für die Kommunikation relevante Parameter nahezu gleichzeitig nur für einen Teil der Übertragungsgeräte oder für alle Übertragungsgeräte zu verändern.

Auch ist es eine Weiterbildung, dass der Übertragungsparameter ein mehrdimensionaler Übertragungsparameter ist oder eine Vielzahl von Eigenschaften und/oder Größen umfasst.

Eine Weiterbildung ist es, dass der erste Übertragungsparameter und/oder der zweite Übertragungsparameter mindestens einen der folgenden Parameter umfasst:
- einen Übertragungsmodus;
- eine Bitrate;
- eine Übertragungsart;
- eine Kanalbelegung
- eine Modulationsart,
- ein Interleaving oder eine Art des Interleavings,
- eine Senderichtung,
- eine Zeitverzögerung;
- eine Trägerfrequenz,
- eine Sendeleistung,
- eine Phase eines Trägers,
- eine Übertragungskodierung,
- eine Übertragungsgeschwindigkeit.

Eine andere Weiterbildung ist es, dass ein Datentelegramm mindestens eine Dateneinheit umfasst. Insbesondere kann das Datentelegramm eine Präambel aufweisen, die den ersten Übertragungsparameter umfasst. Alternativ kann das Datentelegramm eine Präambel aufweisen, die den ersten Übertragungsparameter und den zweiten Übertragungsparameter umfasst.

Hierbei sei angemerkt, dass eine Vielzahl von Übertragungsparametern vorgesehen sein können, die zur Übertragung einer Dateneinheit bzw. einer modifizierten Dateneinheit über mindestens einen Übertragungsabschnitt berücksichtigt werden können.

Insbesondere ist es eine Weiterbildung, dass das Datentelegramm einen Datenteil umfasst.

Auch ist es eine Weiterbildung, dass der Datenteil mindestens einen Übertragungsparameter aufweist oder umfasst.

Ferner ist es eine Weiterbildung, dass eine Vielzahl von Übertragungsparameter für eine Vielzahl von Übertragungsabschnitte vorgesehen sind.

Im Rahmen einer zusätzlichen Weiterbildung ist das Netzwerk ein Gleichwellennetzwerk.

Insbesondere kann es sich bei dem Netzwerk um ein Versorgungsnetzwerk, z.B. um ein Stromversorgungsnetz, handeln.

Eine nächste Weiterbildung besteht darin, dass für einen nächsten Übertragungsabschnitt die Dateneinheit um mindestens einen Übertragungsparameter eines vorhergehenden Übertragungsabschnitts verkürzt wird.

Somit ist es möglich, dass nur diejenigen Übertragungsparameter von einem Übertragungsabschnitt zu dem nächsten Übertragungsabschnitt übertragen werden, die für diesen und die weiteren Übertragungsabschnitte noch benötigt werden. Insbesondere können solche Übertragungsparameter für zurückliegende Streckenabschnitte gelöscht werden.

Eine Ausgestaltung ist es, dass der erste Übertragungsparameter und/oder der zweite Übertragungsparameter mittels einer Prüfzeichenfolge, insbesondere einer Blockprüfzeichenfolge, zumindest teilweise gesichert ist.

Hierbei sei angemerkt, dass beliebige bekannte Verfahren zur redundanten Datenübertragung und/oder Datensicherung einsetzbar sind, insbesondere zur (teilweisen) Absicherung der Übertragungsparameter in den Dateneinheiten.

Weiterhin wird zur Lösung der vorstehend genannten Aufgabe eine Vorrichtung angegeben zur Übertragung einer Dateneinheit umfassend eine Prozessoreinheit und/oder eine zumindest teilweise festverdrahtete oder logische Schaltungsanordnung, die derart eingerichtet ist, dass das Verfahren wie hierin beschrieben durchführbar ist.

Besagte Prozessoreinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen. Eine solche Prozessoreinheit kann insbesondere in einem Kommunikationsgerät vorgesehen sein, das insbesondere einen Sender, Empfänger (Receiver) oder einen Transceiver aufweist.

Weiterhin kann eine festverdrahtete oder logische Schaltungseinheit, z.B. ein FPGA oder ein ASIC oder eine sonstige integrierte Schaltung vorgesehen sein. Insbesondere können elektronische, elektromagnetische, akustische oder sonstige Elemente vorgesehen sein, um unterschiedliche Signale zu erkennen und/oder zu verarbeiten.

Insbesondere kann die Vorrichtung somit eine Einheit zur parallelen Verarbeitung von Signalen und/oder eine Einheit zur seriellen Verarbeitung von Signalen umfassen.

Die Vorrichtung kann umfassen oder ausgeführt sein als: Ein Messgerät, ein Diagnosegerät, ein Zähler, ein Informationsgewinnungsgerät, ein Regelungsgerät, ein Peilgerät und/oder ein entsprechendes System.

Die Vorrichtung kann in der Energietechnik eingesetzt werden.

Es ist möglich, dass das Signal unterschiedliche physikalische Größen umfasst:
- eine elektrische Größe,
- eine elektromechanische Größe,
- eine elektromagnetische Größe,
- eine akustische Größe,
- eine thermische Größe,
- eine mechanische (insbesondere eine hydraulische oder pneumatische) Größe,
- eine chemische Größe,
- eine optische Größe.

Auch Kombinationen aus den vorgenannten Größen sind als Signal(e) möglich.

Es ist eine Weiterbildung, dass die Vorrichtung ein Kommunikationsgerät ist, wobei das Kommunikationsgerät mit einem weiteren Kommunikationsgerät Signale über eine Kommunikationsverbindung, die zumindest teilweise ein Stromnetz umfasst, austauscht.

Weiterhin wird zur Lösung der Aufgabe ein System angegeben umfassend eine Vorrichtung wie hierin beschrieben.

Ausführungsbeispiele der Erfindung werden nachfolgend anhand der Zeichnungen dargestellt und erläutert.

Es zeigen:
- Fig.1: ein Kommunikationsnetzwerk umfassend mehrere Knoten oder Teilnehmer;
- Fig.2: ein Datentelegramm umfassend eine Präambel und einen Datenteil, wobei die Präambel mindestens einen Übertragungsparameter aufweist;
- Fig.3: ein Datentelegramm umfassend eine Präambel und einen Datenteil, wobei die Präambel eine Vielzahl von Übertragungsparametern aufweist.

Es wird ein Kommunikationsverfahren mittels spezieller Dateneinheiten oder Datentelegramme vorgeschlagen.

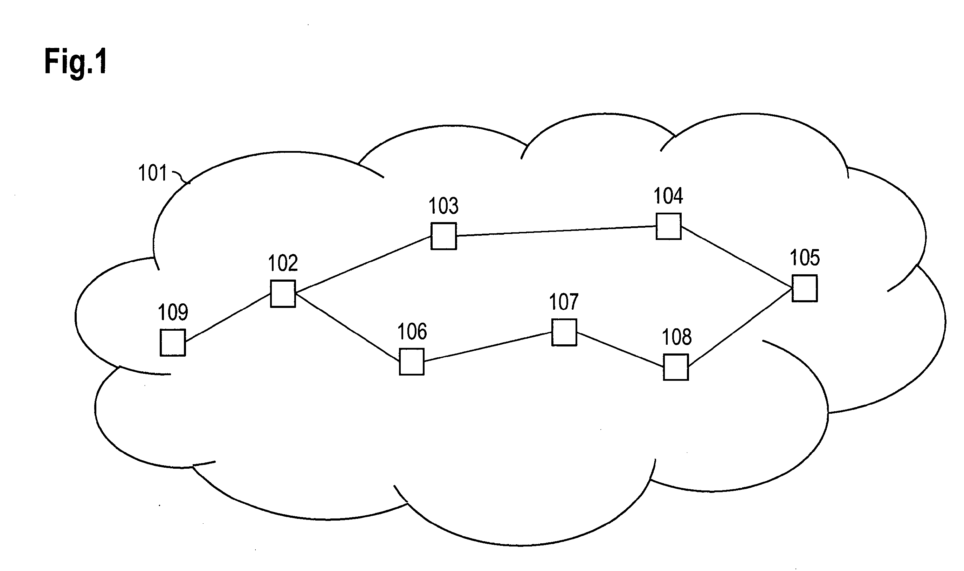

Nachfolgend wird beispielhaft von einem Netzwerk 101 gemäß Fig.1 ausgegangen. Das Netzwerk 101 umfasst Knoten 102 bis 109. Handelt es sich bei dem Netzwerk 101 um ein Gleichwellennetz und wird zu einem Zeitpunkt t=0 von dem Knoten 102 eine Dateneinheit ausgesandt, so erreicht diese Dateneinheit zu den folgenden Zeitpunkten die nachstehend aufgeführten Knoten:

| | |
|---|---|
| t=0: | 102 |
| t=1: | 109, 103, 106 |
| t=2: | 104, 107 |
| t=3: | 105, 108 |
| t=4: | 105 |

Ein Knoten, der zu einem Zeitpunkt tᵢ eine Dateneinheit empfängt, sendet diese Dateneinheit (oder eine modifizierte Dateneinheit) zu einem Zeitpunkt tᵢ₊₁ weiter. Der Ursprungsknoten (im obigen Beispiel Knoten 102) fügt der Dateneinheit einen Zähler bei, der die Lebensdauer (bzw. die Anzahl der Abschnitte oder Hops, die diese Dateneinheit zurücklegen soll) angibt. Dieser Zähler kann bei jedem Weitersenden in einem nachfolgenden Knoten dekrementiert werden. Erreicht der Zähler den Wert 0, wird die Dateneinheit nicht weitergeleitet.

Insoweit agieren die Knoten als Relay-Knoten oder eine Art Repeater.

Jeder Knoten kann dabei ein Teilnehmer, ein Netzelement, etc. innerhalb des Netzwerks sein.

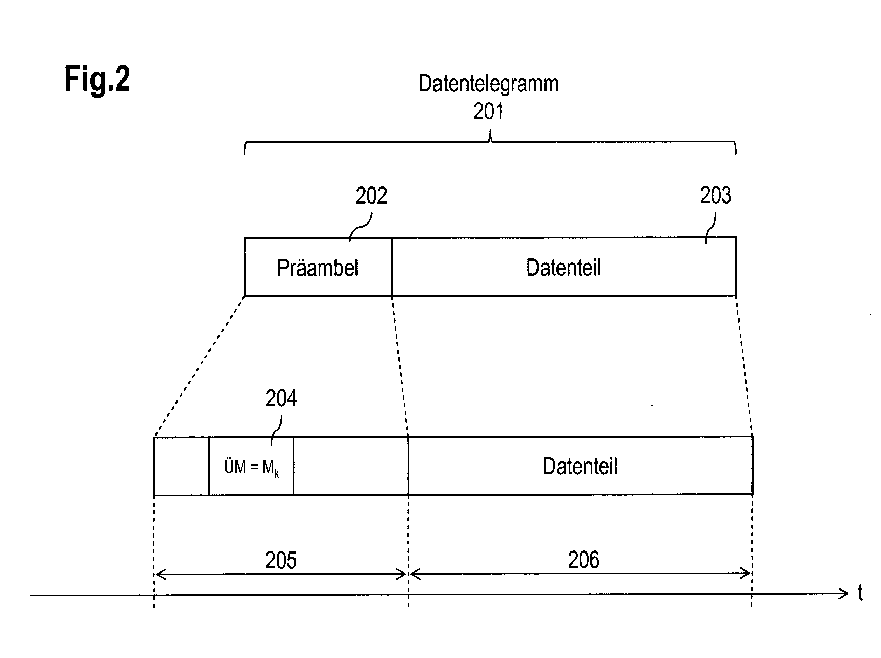

Fig.2 zeigt ein Datentelegramm zum Einsatz in einer Punkt-zu-Punkt-Verbindung und/oder in einer Punkt-zu-Mehrpunkt-Verbindung. Das Datentelegramm 201 umfasst eine Präambel 202 und einen Datenteil 203.

Insbesondere können die Präambel 202 und der Datenteil 203 oder auch das Datentelegramm 201 jeweils einer Dateneinheit entsprechen bzw. als eine solche aufgefasst werden.

Die Präambel 202 umfasst einen Übertragungsparameter, insbesondere eine Information über einen Übertragungsmodus (ÜM) Mₖ 204 (z.B. eine Bitrate, eine Übertragungsart, eine Kanalbelegung), entsprechend dem der Datenteil 203 übertragen werden soll. Die Präambel 202 selbst wird in einem Übertragungsmodus M₁ gesendet, der bei einem Empfänger bzw. bei mehreren Empfängern bekannt ist bzw. bekannt gemacht wurde. Somit wird die Präambel 202 in dem Übertragungsmodus M₁ 205, und der Datenteil 203 in dem Übertragungsmodus Mₖ 206 übertragen.

Nach erfolgreichem Empfang der Präambel 202 wird der jeweilige Empfänger in den jeweiligen anhand der Präambel 202 ermittelten Übertragungsmodus ÜM umgeschaltet, um den weiteren Empfang des Datentelegramms 201, insbesondere des Datenteils 203 erfolgreich fortzusetzen bzw. abzuschließen.

Vorteilhaft wird der Datenteil 203 in dem Datentelegramm 201 derart übermittelt, dass die in einem Empfänger am Anfang der Präambel 202 hergestellte Träger-, Bit-/Symbol- und Blocksynchronisierung auch für den Datenteil 203 anwendbar ist.

Alternativ kann am Ende der Präambel 202 oder zu Beginn des Datenteils 203 ein Synchronisationssignal oder eine Synchronisationssequenz vorgesehen sein, um eine erneute Synchronisierung des Datenteils 203 mit bzw. in dem Übertragungsmodus Mₖ 206 zu ermöglichen.

Die Information 204 in der Präambel 202 über den Übertragungsmodus Mₖ betreffend den Datenteil 203 kann ggf. mit weiteren Informationen anhand einer Blockprüfzeichenfolge gesichert sein.

Bei einer Kommunikation über mehrere Sende- und/oder Empfangseinrichtungen, die zumindest teilweise Datentelegramme weiterleiten, enthält das Datentelegramm vorzugsweise zusätzliche Informationen, die den Übertragungsmodus beispielsweise für die einzelnen Übertragungsabschnitte bzw. Teilstrecken und/oder für eine oder beide Übertragungsrichtungen (z.B. vom Ursprung des Datentelegramms bis zu einem Ziel und zurück) vorgeben.

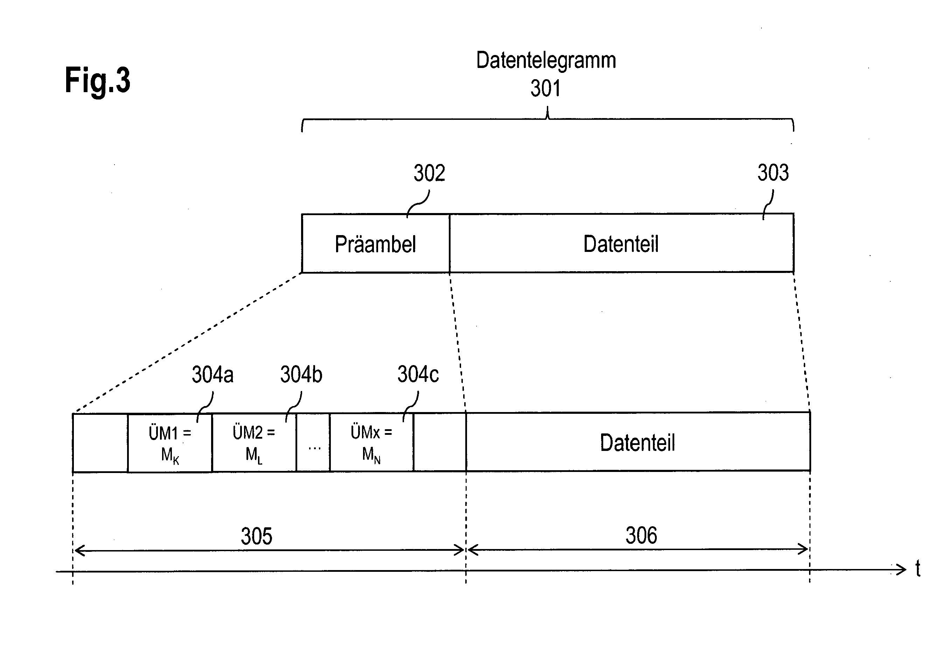

Derartige Informationen können in dem Datentelegramm auf unterschiedliche Weise vorgesehen sein:
a. Gemäß **Fig.3** ist die (gesamte) Information betreffend (unterschiedliche) Übertragungsmodi 304a, 304b und 304c für einzelne Übertragungsabschnitten oder Teilstrecken in der Präambel 302 des Datentelegramms 301 vorgesehen: Entsprechend wird der Datenteil 303 über einen ersten Übertragungsabschnitt in dem Übertragungsmodus M_{K}, über den zweiten Übertragungsabschnitt in dem Übertragungsmodus M_{L} und über den x-ten Übertragungsabschnitt in dem Übertragungsmodus M_{N} übertragen.
b. Lediglich die Information betreffend einen Übertragungsmodus für die aktuelle Weiterleitung über den nächsten Übertragungsabschnitt befindet sich in der Präambel, die verbleibende Information bzw. Übertragungsmodi für nachfolgende Übertragungsabschnitte ist/sind in dem Datenteil des Datentelegramms enthalten.

Vorzugsweise findet die Übertragung von Präambeln in einem zuvor mit den Empfängern vereinbarten (und somit bekannten) Übertragungsmodus statt.

Bevorzugt kann bei jeder Weiterleitung der Datentelegramminhalt in modifizierter Form versendet werden. Insbesondere in Bezug auf den aktuellen bzw. nächsten Übertragungsabschnitt (Teilstrecke oder Hop) können die Informationen über den Übertragungsmodus nach der Präambel verändert werden. Beispielsweise kann ein Zeiger, der auf einen aktuellen Übertragungsmodus aus einer Liste von Übertragungsmodi verweist, aktualisiert werden.

Die vorstehend beschriebene Art der Weiterleitung von Datentelegrammen kann auch über mehrere parallel verlaufende Übertragungsabschnitte (Pfade) und/oder von mehreren Sende-/Empfangseinrichtungen gleichzeitig stattfinden. Somit ist es möglich, dass die Datentelegramme von allen Sendern im Wesentlichen synchron und gleichermaßen modifiziert versendet werden.

Weitere Vorteile: .
Eine Umschaltung und/oder Adaption des Übertragungsmodus bzw. eines Übertragungsparameters in einem Informationsübertragungssystem kann mit jedem zu sendenden Datentelegramm vorgenommen werden.
Für den Empfang eines Datenteils eines Datentelegramms kann die am Anfang der Präambel hergestellte Träger-, Bit-, Symbol- und/oder Blocksynchronisierung (mit)verwendet werden.

Der hier vorgeschlagene Ansatz erlaubt eine flexible und rasche Umstellung der Übertragungsmodi auf sämtlichen oder auf einzelnen Übertragungsabschnitten eines Netzwerkes mit mehreren Teilnehmern, die zumindest teilweise untereinander nicht direkt kommunizieren können und die eventuell ein Datentelegramm synchron an andere Teilnehmer weiterleiten.

### Literatur:

[1] H. Yu, E. Ahn, Y.-H. Lee: "Design of a Robust Model for Power Line Communications", Proc. of the 6th IEEE Intern. Symposium on Power-Line Communications and its Applications, Greece, 27th - 29th March 2002.

## Patentansprüche

1. Verfahren zur Übertragung einer Dateneinheit (201, 301) in einem Gleichwellennetzwerk,
- bei dem die Dateneinheit (201, 301) einen ersten Übertragungsparameter (204, 304a) für einen ersten Übertragungsabschnitt umfasst;
- bei dem die Dateneinheit (201, 301) einen zweiten Übertragungsparameter (304b) für einen zweiten Übertragungsabschnitt umfasst;
- bei dem die Dateneinheit (201, 301) oder ein Teil der Dateneinheit (201, 301) über den ersten Übertragungsabschnitt unter Berücksichtigung der ersten Übertragungsparameters (204, 304a) übertragen wird und bei dem die Dateneinheit (201, 301) oder ein Teil der Dateneinheit über den zweiten Übertragungsabschnitt unter Berücksichtigung des zweiten Übertragungsparameters (304b) übertragen wird;
- bei dem die Dateneinheit (201, 301) einen Datenteil (203, 303) und eine Präambel (202, 302) umfasst, wobei die Präambel (202, 302) den ersten und den zweiten Übertragungsparameter (204, 304) beinhaltet,
- bei dem die Präambel (202, 302) gemäß eines dem jeweiligen Empfänger eines Übertragungsabschnittes bekannten Übertragungsmodus übertragen wird,
- bei dem der Datenteil (203, 303) gemäß des mittels des ersten Übertragungsparameters (204, 304a) bestimmten Übertragungsmodus über den ersten Übertragungsabschnitt übertragen wird und gemäß des mittels des zweiten Übertragungsparameters (304b) bestimmten Übertragungsmodus über den zweiten Übertragungsabschnitt übertragen wird.

2. Verfahren nach Anspruch 1, bei dem der erste Übertragungsparameter (204, 304a) und/oder der zweite Übertragungsparameter (204, 304b) mindestens einen der folgenden Parameter umfasst:
- einen Übertragungsmodus;
- eine Bitrate;
- eine Übertragungsart;
- eine Kanalbelegung
- eine Modulationsart,
- ein Interleaving oder eine Art des Interleavings,
- eine Senderichtung,
- eine Zeitverzögerung,
- eine Trägerfrequenz,
- eine Sendeleistung,
- eine Phase eines Trägers,
- eine Übertragungskodierung,
- eine Übertragungsgeschwindigkeit.

3. Verfahren nach einem der Ansprüche 1 oder 2, bei dem eine Vielzahl von Übertragungsparameter für eine Vielzahl von Übertragungsabschnitte vorgesehen ist.

4. Verfahren nach einem der Ansprüche 1 bis 3, bei dem das Netzwerk ein Stromversorgungsnetz ist.

5. Verfahren nach einem der Ansprüche 1 bis 4, bei dem für einen nächsten Übertragungsabschnitt die Dateneinheit (201, 301) um mindestens einen Übertragungsparameter (204, 304) eines vorhergehenden Übertragungsabschnitts verkürzt wird.

6. Verfahren nach einem der Ansprüche 1 bis 5, bei dem der erste Übertragungsparameter und/oder der zweite Übertragungsparameter mittels einer Prüfzeichenfolge, insbesondere einer Blockprüfzeichenfolge, zumindest teilweise gesichert ist.

7. Vorrichtung zur Übertragung einer Dateneinheit (201, 301) umfassend eine Prozessoreinheit und/oder eine zumindest teilweise festverdrahtete oder logische Schaltungsanordnung, die derart eingerichtet ist, dass das Verfahren nach einem der Ansprüche 1 bis 6 durchführbar ist.

8. Vorrichtung nach Anspruch 7, bei der die Vorrichtung ein Kommunikationsgerät ist, wobei das Kommunikationsgerät mit einem weiteren Kommunikationsgerät Signale über eine Kommunikationsverbindung, die zumindest teilweise ein Stromnetz umfasst, austauscht.

9. System umfassend eine Vorrichtung gemäß einem der Ansprüche 7 oder 8.

## Claims

1. Method for transmitting a data unit (201, 301) in a single frequency network,
- wherein the data unit (201, 301) comprises a first transmission parameter (204, 304a) for a first transmission section;
- wherein the data unit (201, 301) comprises a second transmission parameter (304b) for a second transmission section;
- wherein the data unit (201, 301) or a part of the data unit (201, 301) is transmitted via the first transmission section taking into account the first transmission parameter (204, 304a) and wherein the data unit (201, 301) or a part of the data unit is transmitted via the second transmission section taking into account the second transmission parameter (304b);
- wherein the data unit (201, 301) comprises a data part (203, 303) and a preamble (202, 302), the preamble (202, 302) including the first and the second transmission parameter (204, 304),
- wherein the preamble (202, 302) is transmitted according to a transmission mode known to the respective recipient of a transmission section,
- wherein the data part (203, 303) is transmitted via the first transmission section according to the transmission mode determined by means of the first transmission parameter (204, 304a) and is transmitted via the second transmission section according to the transmission mode determined by means of the second transmission parameter (304b).

2. Method according to claim 1, wherein the first transmission parameter (204, 304a) and/or the second transmission parameter (204, 304b) comprises at least one of the following parameters:
- a transmission mode;
- a bit rate;
- a transmission type;
- a channel arrangement
- a modulation type,
- interleaving or a type of interleaving,
- a send direction,
- a time delay,
- a carrier frequency,
- a transmission power,
- a phase of a carrier wave,
- a transmission encoding,
- a transmission rate.

3. Method according to claim 1 or 2, wherein a plurality of transmission parameters is provided for a plurality of transmission sections.

4. Method according to one of claims 1 to 3, wherein the network is a power supply network.

5. Method according to one of claims 1 to 4, wherein the data unit (201, 301) is shortened by at least one transmission parameter (204, 304) of a preceding transmission section for the next transmission section.

6. Method according to one of claims 1 to 5, wherein the first transmission parameter and/or the second transmission parameter is at least partially secured by means of a check sequence, in particular a frame check sequence.

7. Device for transmitting a data unit (201, 301) comprising a processor unit and/or an at least partially hard-wired or logical circuit arrangement, which is configured in such a way that the method according to one of the claims 1 to 6 can be executed.

8. Device according to claim 7, wherein the device is a communications device, the communications device exchanging signals with a further communications device via a communications link, the communications link at least partially comprising a power network.

9. System comprising a device according to claim 7 or 8.

## Revendications

1. Procédé de transmission d'une unité de données (201, 301) dans un réseau monofréquence, selon lequel :
- l'unité de données (201, 301) comprend un premier paramètre de transmission (204, 304a) pour une première section de transmission ;
- l'unité de données (201, 301) comprend un deuxième paramètre de transmission (304b) pour une deuxième section de transmission ;
- l'unité de données (201, 301) ou une partie de l'unité de données (201, 301) est transmise sur la première section de transmission compte tenu du premier paramètre de transmission (204, 304a) et l'unité de données (201, 301) ou une partie de l'unité de données est transmise sur la deuxième section de transmission compte tenu du deuxième paramètre de transmission (304b) ;
- l'unité de données (201, 301) comprend une partie de données (203, 303) et un préambule (202, 302), le préambule (202, 302) contenant les premier et deuxième paramètres de transmission (204, 304) ;
- le préambule (202, 302) est transmis selon un mode de transmission connu du récepteur respectif d'une section de transmission ;
- la partie de données (203, 303) est transmise sur la première section de transmission selon le mode de transmission déterminé au moyen du premier paramètre de transmission (204, 304a) et sur la deuxième section de transmission selon le mode de transmission déterminé au moyen du deuxième paramètre de transmission (304b).

2. Procédé selon la revendication 1, selon lequel le premier paramètre de transmission (204, 304a) et/ou le deuxième paramètre de transmission (204, 304b) comprennent au moins l'un des paramètres suivants :
- un mode de transmission ;
- un débit binaire ;
- un type de transmission ;
- une occupation de canal ;
- un type de modulation ;
- un entrelacement ou un type d'entrelacement ;
- une direction d'émission ;
- un retard de temps ;
- une fréquence porteuse ;
- une puissance d'émission ;
- une phase d'une porteuse ;
- un codage de transmission ;
- une vitesse de transmission.

3. Procédé selon l'une des revendications 1 ou 2, selon lequel une pluralité de paramètres de transmission est prévue pour une pluralité de sections de transmission.

4. Procédé selon l'une des revendications 1 à 3, selon lequel le réseau est un réseau d'approvisionnement électrique.

5. Procédé selon l'une des revendications 1 à 4, selon lequel l'unité de données (201, 301) est, pour une section de transmission suivante, raccourcie d'au moins un paramètre de transmission (204, 304) d'une section de transmission précédente.

6. Procédé selon l'une des revendications 1 à 5, selon lequel le premier paramètre de transmission et/ou le deuxième paramètre de transmission sont sécurisés, au moins en partie, au moyen d'une séquence de contrôle de trame, et plus particulièrement d'une séquence de contrôle de bloc.

7. Dispositif de transmission d'une unité de données (201, 301), comprenant une unité de processeur et/ou un circuit au moins partiellement câblé ou logique, lequel est configuré de manière à permettre l'exécution du procédé selon l'une des revendications 1 à 6.

8. Dispositif selon la revendication 7, selon lequel le dispositif est un appareil de communication, l'appareil de communication échangeant avec un autre appareil de communication des signaux sur une liaison de communication qui comprend au moins un réseau électrique.

9. Système comprenant un dispositif selon l'une des revendications 7 ou 8.
